# EUROPÄISCHE PATENTSCHRIFT

(11) **EP 1 750 474 B1**
(45) Veröffentlichungstag und Bekanntmachung des Hinweises auf die Patenterteilung: **17.12.2014**
(21) Anmeldenummer: 06013975.5
(22) Anmeldetag: 05.07.2006
(51) Int. Cl.: H04Q 9/00, G01D 4/00

(54) **Funkübertragungssystem**
Radio transmission system
Système de transmission par radio

(30) Priorität: 02.08.2005 DE 102005036250
(43) Veröffentlichungstag der Anmeldung: 07.02.2007
(73) Patentinhaber: Prof. Dr. Horst Ziegler und Partner GbR, 70499 Stuttgart (DE)
(72) Erfinder: Ziegler, Horst, 33100 Paderborn (DE)
(74) Vertreter: Tiesmeyer, Johannes

(56) Entgegenhaltungen:
- EP-A2- 1 028 403
- US-A1- 2003 235 252

## Beschreibung

Die Erfindung betrifft ein Funkübertragungssystem mit wenigstens einem Funksender, der dazu eingerichtet ist, nach einem bestimmten Sendezeitschema in Zeitintervallen mit dazwischen liegenden Pausen Funktelegramme zu senden, und mit wenigstens einem Funkempfänger, der dazu eingerichtet ist, dass er entsprechend dem Sendezeitschema temporär empfangsbereit geschaltet ist, um Funktelegramme von dem Funksender zu empfangen.

Der Erfinder beschäftigt sich mit der Integration eines derartigen Funkübertragungssystems in ein Verbrauchsdatenerfassungssystem, bei dem Verbrauchsmessgeräte oder Verbrauchszähler, wie beispielsweise elektrische Heizkostenverteiler, Warmwasserzähler, Wärmemengenzähler, Gaszähler, Stromzähler oder dgl., an betreffenden Verbrauchsstellen, z.B. in Wohnungen, vorgesehen sind.

Die Funkablesung von Verbrauchszählern ist eine zunehmend mehr genutzte Möglichkeit, die Verbrauchsmengeninformationen zur verbrauchsabhängigen Abrechnung ohne Betreten der betreffenden Wohnungen zu erhalten. Voraussetzung für eine flächendeckende Einführung der Funkablesung sind aber sehr niedrige Geräte-Mehrkosten für "funkablesbare Verbrauchsmessgeräte" im Vergleich zu konventionellen Verbrauchsmessgeräten mit Direktablesung durch Ablesepersonal. Diesbezüglich kommt eine nur unidirektionale Funkdatenübertragung von den Verbrauchsmessgeräten zu einem oder ggf. mehreren Empfängern in Frage, da Hochfrequenzsender schaltungstechnisch wesentlich einfacher und daher kostengünstiger zu realisieren sind als empfindliche Empfänger bzw. bidirektionale Funkeinrichtungen an Verbrauchszählern.

Verbrauchsdatenerfassungssysteme mit Verbrauchszählern, welche Funksender zur unidirektionalen Übermittlung von Verbrauchswertinformationen an einen oder mehrere Empfänger aufweisen, sind bekannt. Zum Stand der Technik kann z.B. auf die EP 1 037 185 A2 verwiesen werden, in der ein Funkübertragungssystem der eingangs genannten Art erläutert wird, welches in einem sogenannten intelligenten Funknetz integriert ist und als Verbrauchsdatenerfassungssystem nutzbar ist. Die Funksender sind vorzugsweise batteriebetriebene Geräte, die mit geringstem Installationsaufwand in Betrieb genommen werden können. Insbesondere bei der Nutzung der Funksender als Komponenten von Verbrauchsmessgeräten wird Wert darauf gelegt, dass der Stromverbrauch dieser Verbrauchsmessgeräte und ihrer Funksender möglichst gering ist, damit Langzeitbatterien als elektrische Energiequellen verwendet werden können und somit nur seltener Batterieaustauschbedarf bei den Geräten vorliegt.

Die Funksender der hier betrachteten Art sind für einen entsprechend energiesparenden Betrieb ausgelegt, was sich darin äußert, dass sie nicht im Dauerbetrieb senden, sondern Funktelegramme nach einem Sendezeitschema in Zeitintervallen mit dazwischen liegenden Pausen senden. Im Falle eines Verbrauchsmessgerätes kann es ausreichen, wenn der Funksender die Funktelegramme mit den Verbrauchsmessdaten und Kennungsinformationen nur gelegentlich in kleinen Sendezeitfenstern überträgt, so dass sich die Phasen erhöhten Strombedarfs des Verbrauchsmessgerätes auf diese Sendezeitfenster im Wesentlichen beschränken.

Zum Stand der Technik kann ferner auf die EP 1 028 403 A2 verwiesen werden, aus der ebenfalls ein Funkübertragungssystem der hier betrachteten Art als Bestandteil eines Verbrauchsdatenerfassungssystems bekannt ist. Bei dem Datenübertragungssystem nach der EP 1 028 403 A2 wird bei fester Zuordnung zwischen einem jeweiligen Funksender eines Endgerätes (z.B. Wärmemengenzählers) und einem Funkempfänger von der Möglichkeit der präziseren Abschätzung des Zeitpunktes der nächsten Datensendung vom Sender zum Empfänger Gebrauch gemacht. Dabei wird folgendem Umstand Rechnung getragen. Jeder der Sender und auch der Empfänger haben jeweils einen eigenen Zeitgeber mit einer eigenen Zeitbasis, die üblicherweise von einem preiswerten Uhrenschwingquarz gebildet wird. Aufgrund von Fertigungstoleranzen der eingesetzten Uhrenschwingquarze und vor allem aufgrund der starken Temperaturabhängigkeit der Frequenz der Uhrenschwingquarze kann es dazu kommen, dass die Zeitgeber untereinander unterschiedlichen Gang aufweisen. Der Temperatureffekt auf die Zeitgeberfrequenz kann insbesondere bei elektronischen Heizkostenverteilern, Warmwasserzählern und Wärmemengenzählern, die Umgebungstemperaturen von bis zu 80°C ausgesetzt sein können, Probleme bereiten, da die instantane Zeitgeberfrequenz und erst recht die daraus akkumulierte Zeit nach Maßgabe der Temperaturschwankungen variieren kann. Bei einem mittleren Sendeabstand von z.B. ca. 5 Stunden bedeutet dies eine Zeitunsicherheit von ca. +/- 2 Sekunden. Berücksichtigt man noch, dass auch die Temperatur der zeitbestimmenden Elemente des Empfängers schwanken kann, so kann sich die Zeitunsicherheit zwischen dem Zeitsystem eines jeweiligen Senders und dem Zeitsystem des Empfängers noch weiter erhöhen, beispielsweise auf +/- 3 Sekunden. Um ein zu einem bestimmten Zeitpunkt erwartetes Datenpaket von einem Sender mit großer Wahrscheinlichkeit empfangen zu können, ist es daher erforderlich, den Empfänger während eines Toleranzzeitintervalls um den vermuteten Zeitpunkt herum empfangsbereit zu halten. Trifft das Datentelegramm bzw. Datenpaket in diesem Toleranzzeitintervall ein, so kann die Zeitzählung empfängerseitig auf den Eintreffzeitpunkt des Datenpakets neu bezogen werden und somit relativ zum Sender resynchronisiert werden. Auf diese Weise kann eine Akkumulation des Zeitfehlers verhindert werden. Bei dem Datenübertragungssystem nach der EP 1 028 403 A2 weist der jeweilige Empfänger eine Zeitsteuereinrichtung zur zeitlichen Steuerung seines Empfangsbetriebs auf, die auf der Basis von Sollwerten für die Zeitabstände aufeinander folgender Funktelegrammsendungen des betreffenden Senders den jeweiligen Zeitpunkt der erwarteten nächsten Datensendung abschätzt, d.h. kalkuliert und den Empfänger zeitweilig jeweils in einem Toleranzzeitintervall, das den geschätzten Zeitpunkt enthält, empfangsbereit schaltet. Die Empfangszeitfenster des Funkempfängers sollten möglichst kurz sein, um den Funkkanal möglichst selten zu besetzen und ferner den elektrischen Energiebedarf des Funkempfängers niedrig zu halten. Auch der Funkempfänger sollte vorzugsweise ein batteriebetriebenes Gerät sein.

Für stationäre Funkübertragungssysteme ist die Reichweite der Funkverbindung zwischen Funksendern und einem den Sendern zugeordneten Funkempfänger insbesondere auch von großer wirtschaftlicher Bedeutung. Die Anzahl an Funksendern, von denen ein Funkempfänger Funktelegrammsendungen sicher empfangen kann (Ausstattungsfaktor), hängt nämlich wesentlich von der Reichweite ab. Im Falle eines Verbrauchsdatenerfassungssystems wird bei hoher Funkreichweite des darin einbezogenen Funkübertragungssystems in vielen Fällen ein Funkempfänger je Liegenschaft oder je Treppenhaus genügen, wohingegen bei geringer Funkreichweite meist in jedem Stockwerk ein solcher Treppenhaus-Funkempfänger vorhanden sein muss, um die Funktelegrammsendungen aller mit Funksendern ausgestatteten Verbrauchsmessgeräte in dem betreffenden Haus erfassen zu können. Da ein solcher Primär-Funkempfänger erheblich teurer ist als ein mit Funksender ausgestattetes Endgerät, spielen seine auch auf die ihm zugeordneten Endgeräte umgelegten Kosten für Fertigung, Montage und Inbetriebnahme eine wesentliche Rolle bei der Beurteilung der Wirtschaftlichkeit eines Verbrauchsdatenerfassungssystems mit Funkfernablesung. Eine Steigerung der Sendeleistung der Funksender wäre eine Möglichkeit der Reichweitenvergrößerung. Diese Möglichkeit ist jedoch bei den Endgeräten durch die Zulassungsgrenzen des Frequenzbandes, durch die Kosten für die aufwendigeren Senderkomponenten und auch durch die Leistungsfähigkeit und Größe der Batterie bzw. des Pufferkondensators begrenzt. Eine weitere Einflusskomponente für die Funkreichweite ist die Empfindlichkeit des Funkempfängers, die hauptsächlich durch die Empfängerbandbreite bestimmt wird. Die Empfängerbandbreite kann bei heutigen Empfängerbausteinen in weiten Bereichen entweder durch Wahl eines geeigneten ZF-Filters oder bei digitalen ZF-Filtern sogar dynamisch frei gewählt werden. Die für eine hohe Empfangsempfindlichkeit und damit für eine funktechnisch hohe Reichweite erforderliche minimale Empfangsbandbreite erfordert üblicherweise eine langsame Modulation zur Erzielung einer kleinen Senderbandbreite. Langsame Modulation bedeutet aber, dass auch die Funktelegramme länger dauern, was wiederum unerwünscht ist, da dies einen zeitlich verlängerten Sende- und Empfangsbetrieb für die Daten-übermittlung zwischen einem Sender und einem Empfänger bedeutet und somit eine größere Belastung der Stromversorgungsbatterien mit sich bringt. Bei den üblicherweise verwendeten hohen Frequenzen (meist 868 MHz - 870 MHz) spielen die Frequenztoleranzen der Taktgeberquarze der Sender und der Empfänger die dominante Rolle bei der Wahl der nutzbaren Empfängerbandbreite und somit der erreichbaren Empfangsempfindlichkeit und der Funkreichweite der betreffenden Funkverbindungen.

Aus Kostengründen werden in den betreffenden Endgeräten mit Funksendern als Taktgeber nur Quarze mit relativ großer Fertigungstoleranz und vergleichsweise starker Temperaturabhängigkeit der Schwingungsfrequenz eingesetzt. Bei den in geringerer Stückzahl erforderlichen Funkempfängern werden üblicherweise hochwertigere Schwingquarze als Taktgeber verwendet, deren Fertigungstoleranz und deren Abhängigkeit der Frequenz von der Temperatur relativ gering sind. Die für eine Funkverbindung zwischen Sender und Empfänger erforderliche effektive Empfängerbandbreite hängt dominant von der Frequenzgenauigkeit, also von Fertigungstoleranzen, Alterung und Temperatureinfluss des Senderquarzes ab. Zu große Abweichungen der vom Senderquarz bestimmten Sendefrequenz von einer am Empfänger eingestellten Soll-Empfangsfrequenz kann dazu führen, dass die Sendefrequenz außerhalb der Empfangsbandbreite des Empfängers liegt, so dass Funktelegrammsendungen des Senders von dem Empfänger nicht empfangen werden. Bei Verbrauchsmessgeräten, die hohen Temperaturen ausgesetzt sind, etwa Heizkostenverteilern, Wärmemengenzählern o. dgl., kommt erschwerend hinzu, dass der die Sendefrequenz bestimmende Senderquarz stark schwankenden und teilweise hohen Temperaturen ausgesetzt ist, so dass seine Temperaturabhängigkeit der Frequenz eine viel größere Rolle spielt als die Temperaturabhängigkeit der Frequenz bei den normalerweise nur den Raumtemperaturschwankungen ausgesetzten Quarzen des Empfängers. Bisher wurde die Empfängerbandbreite aus der Summe der Toleranzen der Frequenzen des Senderquarzes und des Empfängerquarzes zuzüglich der erforderlichen Signalbandbreite bestimmt. Auf diese Weise ergibt sich eine relativ große Empfängerbandbreite und eine vergleichsweise geringe Empfangsempfindlichkeit mit der Folge, dass auch die Funkreichweite nicht sehr groß ist.

Etwas kleinere Bandbreiten ließen sich realisieren, wenn ein Fertigungsabgleich der Senderquarze und Empfängerquarze vorgenommen würde. Ein solcher Fertigungsabgleich ist aber aufwendig und teuer und berücksichtigt nicht zeitliche Änderungen der Quarzfrequenz durch Alterung und Temperatureinflüsse. Klassische AFC-Frequenzregelungen wie beim Rundfunkempfang scheiden bei Funkübertragungssystemen der hier betrachteten Art aus, da die Funksender hier nur sehr kurze Funktelegramme in großen Zeitabständen senden. Es wäre wünschenswert, auch bei solchen Sendestrukturen trotz der großen Frequenztoleranzen der in den Sendern und ggf. auch in den Empfängern verwendeten preiswerten Quarze mit einer möglichst allein durch die Sendebandbreite des Nutzsignals bestimmten Empfängerbandbreite auszukommen.

Der Erfindung liegt die Aufgabe zugrunde, ein Funkübertragungssystem der Eingangs genannten Art bereitzustellen, welches trotz geringer Frequenzstabilität des Funksenders mit einer vergleichsweise kleinen Empfängerbandbreite betrieben werden kann und somit eine größere Funkreichweite erlaubt.

Zur Lösung dieser Aufgabe wird erfindungsgemäß vorgeschlagen, dass der Funkempfänger Mittel zur Änderung seiner Empfangseinstellungen für den Empfang der jeweils nächsten Funktelegrammsendung des Funksenders in Abhängigkeit von der Empfangsqualität beim vorausgegangenen Empfang einer Funktelegrammsendung von dem Funksender aufweist, wobei diese Mittel zur Änderung der Empfangseinstellungen vorzugsweise Mittel zur Einstellung der Soll-Empfangsfrequenz für den Empfang der jeweils nächsten Funktelegrammsendung von dem Funksender sind bzw. aufweisen.

Die vorzugsweise unidirektionalen Funksender senden ihre Funktelegramme z.B. in zeitlichen Abständen von Sekunden bis Stunden wiederholt aus. Dabei kann der Nutzinhalt der Funktelegramme unverändert bleiben, etwa wenn im Falle eines Verbrauchszählers dessen Funksender die Zählernummer als Kennungsinformation und einen zu einem vergangenen Ablesestichtag ermittelten Verbrauchswert erneut sendet. Der Nutzinhalt der wiederholt gesendeten Telegramme kann sich jedoch auch ändern. Die Sender senden nach einem bestimmten Zeitschema periodisch oder pseudostochastisch ihre Funktelegramme, wobei der Empfänger so eingestellt ist, dass er in Empfangszeitfenstern, die mit den Sendezeitfenstern der zugeordneten Funksender zusammenfallen sollen, empfangsbereit ist. Wie auch schon in der EP 1 028 403 A2 erläutert, sind die Empfangszeitfenster mit einer Zeittoleranz bemessen und daher üblicherweise größer als die Sendezeitfenster.

Die Einrichtung einer Funkverbindung zwischen einem Funksender und einem Funkempfänger erfolgt vorzugsweise so, dass der Empfänger mit einer im Wesentlichen durch die Signalbandbreite (und nicht durch die von der Summe der Sende- und Empfänger-Frequenztoleranzen mitbestimmte Bandbreite) sequenziell mehrere Empfangsversuche mit jeweils leicht unterschiedlichen Soll-Empfangsfrequenzen jeweils für die Dauer der maximalen Sendezeitabstände des Senders durchführt. Der Empfänger ist vorzugsweise dazu eingerichtet, die Pegel der Empfangsfeldstärke und/oder die Frequenzabweichung der empfangenen Frequenz von der Mittenlage des Diskriminators bei einem erfolgreichen Empfang einer Funktelegrammsendung von dem Funksender zu erfassen und aus dem Vergleich der Empfangsfeldstärkenwerte und/oder Frequenzoffsetwerte aufeinander folgender Empfangsereignisse die optimale Empfangsfrequenz für den ihm zugeordneten Funksender zu bestimmen und zu speichern. Ferner kann es vorgesehen sein, dass der Empfänger in ähnlicher Weise die Modulationsrate und den Modulationshub bestimmt und für den Empfang der jeweils nächsten Funktelegrammsendung des Funksendes nachjustiert.

Zur Bestimmung der optimalen Empfangsfrequenz und ggf. der optimalen Modulationsparameter für den Empfang der jeweils nächsten Funktelegrammsendung sind die Mittel zur Änderung der Empfangseinstellungen vorgesehen. Der Begriff Empfangseinstellung betrifft die Frequenzabstimmung des Empfängers und/oder die Abstimmung wenigstens eines Modulationsparameters, wie etwa der Modulationsrate oder des Modulationshubs.

Hat der Empfänger entsprechend den vorstehenden Anmerkungen einen optimalen Erwartungswert für die Abstimmung der Frequenz bzw. Modulationsparameter für den Empfang der jeweils nächsten Funktelegrammsendung des betreffenden Funksenders ermittelt, so wird der Empfänger seine Empfangseinstellungen entsprechend anpassen und in dem nächsten Empfangszeitfenster, das dem betreffenden Funksender zugeordnet ist, mit diesen angepassten Empfangseinstellungen in Empfangsbereitschaft übergehen. Auf diese Weise lassen sich alle Fertigungstoleranzen des Sendequarzes und des Empfängerquarzes weitgehend eliminieren. Frequenzänderungen aufgrund von Alterungseffekten erfolgen so langsam, dass der Funkempfänger solche Alterungseinflüsse ohne Empfindlichkeitsverlust durch permanente kleine Nachstellungen seiner Soll-Empfangsfrequenz für den jeweiligen Funksender kompensieren kann. Der zeitlich veränderliche Temperatureinfluss auf die Frequenzen der Quarze kann schließlich dadurch eliminiert werden, dass zunächst mit der zuletzt erfolgreichen Frequenzeinstellung bzw. Modulationseinstellung für den betreffenden Funksender ein Empfangsversuch in dessen prognostiziertem Sendezeitfenster gemacht wird. Ist der Empfangsversuch erfolgreich, so wird ein eventueller kleiner Frequenzgang z.B. durch die Information über die Diskriminatormittenlage bzw. über Frequenzabweichungen davon berücksichtigt, um die Empfangseinstellungen für den Empfang der jeweils nächsten Funktelegrammsendung des Funksenders zu optimieren. Ebenso ist es möglich, die zuletzt gemessenen Modulationsparameter (z.B. Modulationstaktrate oder Frequenzhub bei einer FSK-Modulation) zur Grundlage der Empfängereinstellungen für künftige Empfangsversuche zu machen. Bei einer kontinuierlichen Drift der Parameter kann der Empfänger mit einem Vorhalt auch eine Parameter- und insbesondere eine Frequenzdrift berücksichtigen. Dabei sollte allerdings der zeitliche Abstand der Funktelegrammsendungen des betreffenden Funksenders und der entsprechende zeitliche Abstand der Empfangsversuche so gewählt werden, dass sich die Einflussgröße Temperatur während dieses zeitlichen Abstandes nur wenig verändert.

Sollte es dennoch vorkommen, dass z.B. aufgrund extremer Temperaturschwankungen und/oder langen Sendezeitabständen ein Empfangsversuch so fehlgeschlagen ist, dass eine Bestimmung der Frequenzablage des Diskriminators oder ggf. der betreffenden Modulationsparameter nicht mehr möglich ist, so werden weitere Empfangsversuche vorzugsweise mit anderen Empfangseinstellungen gemacht. Die Empfänger sind hierzu vorbereitet, wobei gemäß einer Vorgehensvariante die Empfangseinstellungen in jeweils kleinen Schritten geändert werden. Gemäß einer anderen Vorgehensweise erfolgt die Änderung der Empfangseinstellungen bei vorausgegangenem Empfangsverlust durch stochastische Änderungen der Frequenz bzw. Modulationseinstellungen innerhalb des durch den maximalen Temperatur- und Alterungseinfluss auf die Quarzfrequenzen bestimmten Bereichs. Bei den Empfangseinstellungen kommt es dabei immer nur auf die relativen Änderungen der Frequenzen von Empfänger und Sender an, da z.B. der Empfänger-Synthesizer stets nur eine nominelle, d.h. eine auf seine jeweilige eigene Quarzfrequenz bezogene Empfangsfrequenz einstellen kann.

Wie schon dargelegt, umfasst der Funkempfänger eine Diskriminatorschaltung, bei der es sich vorzugsweise um einen Diskriminator des Demodulators handelt, wobei die Diskriminatorschaltung zur Erfassung von Abweichungen der jeweils eingestellten Soll-Empfangsfrequenz von der (nominellen) Sendefrequenz des Funksendes dient. Die Mittel zur Einstellung der Soll-Empfangsfrequenz für den Empfang der jeweils nächsten Funktelegrammsendung sind dazu eingerichtet, die Soll-Empfangsfrequenz für den Empfang der jeweils nächsten Funktelegrammsendung des betreffenden Funksenders nach Maßgabe der von der Diskriminatorschaltung erfassten Abweichung der Soll-Empfangsfrequenz des Funkempfängers von der (nominellen) Sendefrequenz des Funksenders beim Empfang der vorausgegangenen Funktelegrammsendung des Funksenders einzustellen. Die Mittel zur Änderung der Empfangseinstellungen umfassen vorzugsweise einen Mikroprozessor mit Speichermöglichkeit für die betreffenden Parameterwerte der Empfangseinstellungen.

Vorzugsweise sind einem jeweiligen Funkempfänger mehrere Funksender zugeordnet, die nach einem jeweiligen eigenen Sendezeitschema in Zeitintervallen mit dazwischen liegenden Pausen Funktelegramme senden, wobei der Funkempfänger dazu eingerichtet ist, dass er entsprechend den Sendezeitschema dieser Funksender temporär empfangsbereit geschaltet ist, um die Funktelegramme von den Funksendern zu empfangen, wobei die Mittel zur Änderung der Empfangseinstellungen des Funkempfängers dazu eingerichtet sind, die Empfangseinstellungen für den Empfang der jeweils nächsten Funktelegrammsendung jedes einzelnen Funksenders in Abhängigkeit von der Empfangsqualität beim vorausgegangenen Empfang einer Funktelegrammsendung des jeweiligen Funksenders zu ändern. Wie schon erwähnt, kann als Kriterium für die Bewertung der Empfangsqualität bei Empfang einer Funktelegrammsendung insbesondere die Empfangsfeldstärke oder/und die Frequenzoffsetinformation des Diskriminators herangezogen werden.

Ein Aspekt der Erfindung betrifft ein Verbrauchsdatenerfassungssystem mit einem Funkübertragungssystem nach der Erfindung, wobei das Verbrauchsdatenerfassungssystem Verbrauchsmessgeräte mit Funksendern umfasst und die Funksender dazu eingerichtet sind, Verbrauchsmessdaten ihrer Verbrauchsmessgeräte in Zuordnung zu Kennungsdaten zur Identifizierung der Verbrauchsmessgeräte zu senden. Die Verbrauchsmessgeräte sind vorzugsweise batteriebetriebene Geräte, wobei deren Funksender nur unidirektional senden und eine Funkempfangsmöglichkeit bei den Verbrauchsmessgeräten nicht vorgesehen ist, wenngleich eine solche in alternativen Ausführungsformen der Erfindung vorgesehen sein könnte.

Das Funkübertragungssystem kann in ein Funknetz mit mehreren Funkempfängern einbezogen sein, die gruppenweise verschiedenen Funksendern zugeordnet sind, wobei das Funknetz eine Datensammelzentrale für die von den Funksendern gesendeten Nutzdaten umfasst. Die Sammelzentrale kann z.B. Datenauswertungs- und -abrechnungsfunktionen ausführen.

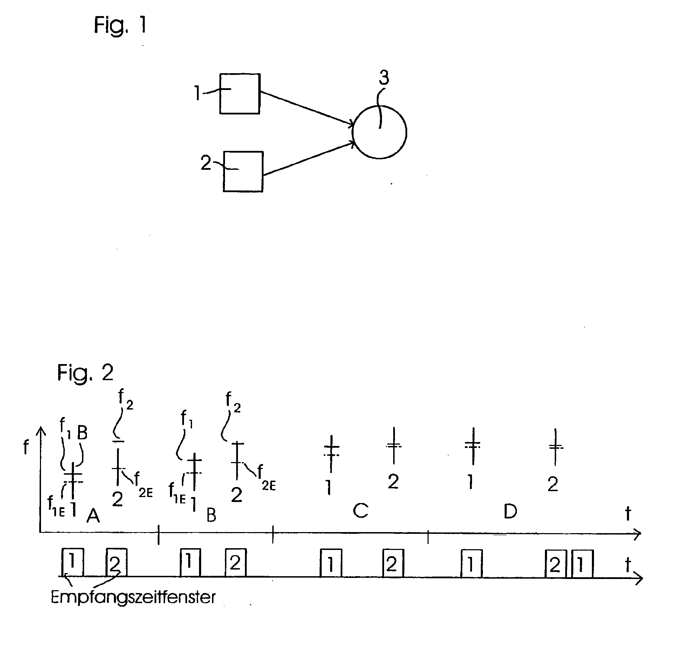

Zur Erläuterung der Funktionsweise einer Ausführungsform der Erfindung wird nachstehend auf die Figuren 1 und 2 Bezug genommen.
- Fig. 1: zeigt in stark vereinfachter schematischer Darstellung zwei Funksender und einen den Funksendern zugeordneten Funkempfänger.
- Fig. 2: zeigt in einem Frequenz-Zeitdiagramm verschiedene Einstellungen des Erwartungswertes der nominellen Sendefrequenz im Vergleich mit angenommenen tatsächlichen nominellen Empfangsfrequenzen.

Gemäß Fig. 1 ist der Funkempfänger 3 den beiden Funksendern 1 und 2 zugeordnet, um Funktelegramme von den Funksendern 1 und 2 zu empfangen. Die Funksender 1 und 2 können z.B. Funkelemente von Verbrauchszählern sein, welche Verbrauchswertinformationen in Zuordnung zu Zählerkennungsinformationen an den Empfänger 3 senden, der diese Informationen an eine Abrechnungszentrale weitergeben kann.

Jeder der beiden Funksender sendet seine Funktelegramme nach einem bestimmten Sendezeitschema, wie dies in dem unteren Teil der Fig. 2 anhand der als Rechteckimpulse dargestellten Zeitfenster angedeutet ist. In Fig. 2 sind in einem zeitlichen Ausschnitt die Empfangszeitfenster des Empfängers 3 gezeigt, welche entsprechend dem Sendezeitschema der Empfänger geöffnet werden. Das Sendezeitschema kann ein starres Zeitschema oder ein pseudostatistisch erzeugtes Zeitschema sein. Jedenfalls sind diese Zeitschemata dem Empfänger 3 bekannt, so dass er seine Empfangszeitfenster entsprechend öffnet, d.h. in den Empfangszeitfenstern zum Empfang von Funktelegrammsendungen der betreffenden Funksender bereitgeschaltet ist. Die Einstellung der Empfangszeitfenster kann z.B. in der Weise erfolgen, wie es in der EP 1 028 403 A2 erläutert ist.

Jeder der Funksender 1 und 2 weist als Frequenzgeber einen Quarz aus Massenproduktion mit einer relativ großen Fertigungstoleranz und mit einer signifikanten Temperaturabhängigkeit der Quarzschwingungsfrequenz auf. Diese Quarze sind kostengünstig und tragen somit zu einer wirtschaftlichen Realisierung des Funkübertragungssystems bei.

Da bei jedem der Sender die Sendefrequenz (Frequenz der modulierten Trägerschwingung des übertragenen Signals) von der Quarzfrequenz abgeleitet ist, unterliegt auch die Sendefrequenz relativ großen Schwankungen. Dem wurde bisher dadurch begegnet, dass man empfängerseitig eine große Empfängerbandbreite eingestellt hat. Wie schon oben erläutert, bedeutet eine große Empfängerbandbreite jedoch eine verringerte Empfangsempfindlichkeit und damit eine kleinere Reichweite der Funkverbindung zwischen Funksender und Funkempfänger.

Gemäß der vorliegenden Erfindung ist der Empfänger 3 mit Mitteln zur Änderung seiner Empfangseinstellungen für den Empfang der jeweils nächsten Funktelegrammsendung eines Funksenders 1 bzw. 2 in Abhängigkeit von der Empfangsqualität beim vorausgegangenen Empfang einer Funktelegrammsendung von dem betreffenden Funksender ausgestattet. Die Empfangseinstellungen betreffen die Einstellung der Soll-Empfangsfrequenz, d.h. die Einstellung eines Erwartungswertes für die Sendefrequenz, und/oder ggf. die Einstellung von Modulationsparametern. Die Einstellung der zeitlichen Lage und Ausdehnung der Empfangszeitfenster zählt nicht zu den Empfangseinstellungen im Sinne der in Anspruch 1 verwendeten Terminologie.

Anhand der Fig. 2 wird im Folgenden die Wirkung der Mittel zur Änderung der Empfangseinstellungen an einem Beispiel erläutert. Eingestellt bzw. geändert wird die jeweilige Soll-Empfangsfrequenz des Empfängers für den Empfang der jeweils nächsten Funktelegrammsendung jeder der beiden Funksender 1 und 2.

Entsprechend der Nummerierung der Empfangszeitfenster ist der Empfänger 3 zu den erwarteten Sendezeiten der Funksender 1 und 2 empfangsbereit geschaltet. Zunächst sendet der Funksender 1, wobei der Empfänger als Erwartungswert für die (nominelle) Sendefrequenz (= Soll-Empfangsfrequenz) auf den Wert f_{1E} abgestimmt ist. Unter nominelle Frequenz wird die Frequenz im Zeit- bzw. Taktsystem des Empfängers 3 bezeichnet. Die vertikalen Striche B im oberen Teil der Fig. 2 deuten die Bandbreite des Empfängers 3 an. In dem ersten dem Funksender 1 zugeordneten Empfangszeitfenster im Zeitabschnitt A liegt die Sendefrequenz f₁ geringfügig über dem Erwartungswert f_{1E}, jedoch noch innerhalb der Empfängerbandbreite B. Ein Maß für diese Frequenzabweichung nach Betrag und Richtung liefert der Demodulator-Diskriminator des Empfängers 3 z.B. als Spannungswert. Dieser Spannungswert wird von einem Mikroprozessor des Empfängers 3 verarbeitet, um den nächsten Erwartungswert für die Sendefrequenz des Senders 1 zu bestimmen und am Empfänger 3 für den Empfang des nächsten Funktelegramms von dem Funksender 1 einzustellen. In Fig. 2 sind mit den Zahlen 1 und 2 jeweils die den Sendern 1 und 2 ihrer Nummerierung entsprechend zugeordneten Sendeereignisse gekennzeichnet. Die Buchstaben A - D dienen zur Unterscheidung der Zeitbereiche, innerhalb derer jeder der Funksender 1 und 2 ein jeweiliges Funktelegramm gesendet hat. Verfolgt man nun die Einstellungen der mit gestrichelter Linie in Fig. 2 eingezeichneten Erwartungswerte f_{1E} für die nominelle Sendefrequenz, so kann für den Funksender 1 festgestellt werden, dass der Empfänger 3 aufgrund der Nachstellung der Erwartungswerte in jedem Zeitbereich A - D Funkempfang vom Funksender 1 hat, obwohl die Sendefrequenz des Funksenders 1 driftet.

Für den Funksender 2 wurde angenommen, dass die tatsächliche Sendefrequenz f₂ im Zeitbereich A außerhalb der Empfängerbandbreite um den Erwartungswert f_{2E} herum liegt, so dass in dem ersten Empfangszeitfenster kein Funktelegramm vom Funksender 2 empfangen werden konnte. Der Funkempfänger 3 stellt in einem solchen Fall nach einer vorbestimmten Suchstrategie die Soll-Empfangsfrequenz f_{2E} auf einen neuen Erwartungswert ein, um den Kontakt zum Funksender 2 wieder herzustellen. In dem Beispiel gemäß Fig. 2 gelingt das in dem Zeitabschnitt B, wobei die Sendefrequenz f₂ in dem Beispiel der oberen Grenze der Empfängerbandbreite liegt. Dies reicht jedoch dazu aus, ein Funktelegramm von dem Sender 2 zu empfangen und die Frequenzoffsetinformationen zu gewinnen, um für das nächste Sendeereignis des Funksenders 2 einen neuen Erwartungswert für die nominelle Sendefrequenz zu bestimmen. In dem Zeitabschnitt C in Fig. 2 liegt dieser aktualisierte Erwartungswert für die nominelle Sendefrequenz f_{2E} dann auch schon recht nahe bei der tatsächlichen nominellen Sendefrequenz.

Dieses erfindungsgemäße Konzept erlaubt es, die Empfängerbandbreite relativ schmal zu halten und somit ein Funkübertragungssystem mit guter Funkreichweite zu realisieren.

## Patentansprüche

1. Funkübertragungssystem mit wenigstens einem Funksender (1, 2), der dazu eingerichtet ist, nach einem bestimmten Sendezeitschema in Zeitintervallen mit dazwischen liegenden Pausen Funktelegramme zu senden, und mit wenigstens einem Funkempfänger (3), der dazu eingerichtet ist, dass er entsprechend dem Sendezeitschema temporär empfangsbereit geschaltet ist, um Funktelegramme von dem Funksender (1, 2) zu empfangen, **dadurch gekennzeichnet, dass** der Funkempfänger (3) Mittel zur Änderung seiner Empfangseinstellungen für den Empfang der jeweils nächsten Funktelegrammsendung des Funksenders in Abhängigkeit von der Empfangsqualität beim vorausgegangenen Empfang einer Funktelegrammsendung von dem Funksender (1, 2) aufweist.

2. Funkübertragungssystem nach Anspruch 1, **dadurch gekennzeichnet, dass** die Mittel zur Änderung der Empfangseinstellungen Mittel zur Einstellung der Soll-Empfangsfrequenz (f_{1E}, f_{2E}) für den Empfang der jeweils nächsten Funktelegrammsendung von dem Funksender aufweisen.

3. Funkübertragungssystem nach Anspruch 2, **dadurch gekennzeichnet, dass** der Funkempfänger (3) eine Diskriminatorschaltung zur Erfassung von Abweichungen der jeweils eingestellten Soll-Empfangsfrequenz (f_{1E}, f_{2E}) von der Sendefrequenz (f₁, f₂) des Funksenders aufweist, wobei die Mittel zur Einstellung der Soll-Empfangsfrequenz für den Empfang der jeweils nächsten Funktelegrammsendung dazu eingerichtet sind, die Soll-Empfangsfrequenz für den Empfang der jeweils nächsten Funktelegrammsendung nach Maßgabe der von der Diskriminatorschaltung erfassten Abweichung der Soll-Empfangsfrequenz (f_{1E}, f_{2E}) des Funkempfängers (3) von der Sendefrequenz (f₁, f₂) des Funksenders beim Empfang der vorausgegangenen Funktelegrammsendung des Funksenders einzustellen.

4. Funkübertragungssystem nach Anspruch 2 oder 3, **dadurch gekennzeichnet, dass** die Mittel zur Einstellung der Soll-Empfangsfrequenz für den Empfang der jeweils nächsten Funktelegrammsendung dazu eingerichtet sind, die Soll-Empfangsfrequenz (f_{1E}, f_{2E}) für den Empfang der jeweils nächsten Funktelegrammsendung unverändert zu lassen, falls der Funkempfänger(3) die vorausgegangene Funktelegrammsendung mit einer Mindestempfangsfeldstärke empfangen konnte.

5. Funkübertragungssystem nach einem der vorhergehenden Ansprüche, **dadurch gekennzeichnet, dass** die Mittel zur Änderung der Empfangseinstellungen Mittel zur Einstellung eines Soll-Modulationsparameters, insbesondere des Soll-Modulationshubes oder der Soll-Modulationsrate, für den Empfang und die Demodulation der jeweils nächsten Funktelegrammsendung von dem Funksender aufweisen.

6. Funkübertragungssystem nach einem der vorhergehenden Ansprüche, **dadurch gekennzeichnet, dass** die Mittel zur Änderung der Empfangseinstellungen Mittel zur Erfassung der Empfangsfeldstärke als Kriterium für die Bewertung der Empfangsqualität beim Empfang einer Funktelegrammsendung umfassen.

7. Funkübertragungssystem nach einem der vorhergehenden Ansprüche, **dadurch gekennzeichnet, dass** die Mittel zur Änderung der Empfangseinstellungen des Funkempfängers dazu eingerichtet sind, Werte wenigstens eines Funkempfangsparameters beim Empfang aufeinander folgender Funktelegrammsendungen des Funksenders zu speichern und auf der Basis dieser gespeicherten Werte einen Erwartungswert des Funkempfangsparameters für den Empfang der nächstfolgenden Funktelegrammsendung zu bestimmen.

8. Funkübertragungssystem nach Anspruch 7, **dadurch gekennzeichnet, dass** der Funkempfangsparameter eine von der Abweichung der eingestellten Soll-Empfangsfrequenz (f_{1E}, f_{2E}) von der Sendefrequenz (f₁, f₂) abhängige Größe beim Empfang der Funktelegrammsendungen ist.

9. Funkübertragungssystem nach Anspruch 7, **dadurch gekennzeichnet, dass** der Funkempfangsparameter die Empfangsfeldstärke beim Empfang der Funktelegrammsendungen ist.

10. Funkübertragungssystem nach Anspruch 7, **dadurch gekennzeichnet, dass** der Funkempfangsparameter ein Modulationsparameter ist.

11. Funkübertragungssystem nach einem der vorhergehenden Ansprüche, **dadurch gekennzeichnet, dass** dem Funkempfänger (3) mehrere Funksender (1, 2) zugeordnet sind, die nach einem jeweiligen eigenen Sendezeitschema in Zeitintervallen mit dazwischen liegenden Pausen Funktelegramme senden, wobei der Funkempfänger (3) dazu eingerichtet ist, dass er entsprechend den Sendezeitschemata dieser Funksender temporär empfangsbereit geschaltet ist, um die Funktelegramme von den Funksendern zu empfangen, wobei die Mittel zur Änderung der Empfangseinstellungen des Funkempfängers dazu eingerichtet sind, die Empfangseinstellungen für den Empfang der jeweils nächsten Funktelegrammsendung jedes einzelnen Funksenders in Abhängigkeit von der Empfangsqualität beim vorausgegangenen Empfang einer Funktelegrammsendung des jeweiligen Funksenders zu ändern.

12. Funkübertragungssystem nach einem der vorhergehenden Ansprüche mit mehreren Funksendern, **dadurch gekennzeichnet, dass** es in ein Verbrauchsdatenerfassungssystem mit mehreren Verbrauchsmessgeräten einbezogen ist, wobei die Verbrauchsmessgeräte mit den Funksendern ausgerüstet - und die Funksender dazu eingerichtet sind, Verbrauchsmessdaten ihrer Verbrauchsmessgeräte in Zuordnung zu Kennungsdaten zur Identifizierung der Verbrauchsmessgeräte zu senden.

13. Funkübertragungssystem nach Anspruch 10 oder 11, **dadurch gekennzeichnet, dass** es mehrere Funkempfänger umfasst, die gruppenweise verschiedenen Funksendern zugeordnet und in ein Funknetz integriert sind, welches eine Datensammelzentrale für die von den Funksendern gesendeten Nutzdaten umfasst.

14. Funkübertragungssystem nach einem der vorhergehenden Ansprüche, **dadurch gekennzeichnet, dass** der bzw. die Funksender keine Empfangsfunktion aufweisen.

15. Funkübertragungssystem nach einem der vorhergehenden Ansprüche, **dadurch gekennzeichnet, dass** der bzw. die Funksender und/oder der bzw. die Funkempfänger batteriebetriebene Geräte sind.

## Claims

1. Radio transmission system comprising at least one radio transmitter (1, 2) adapted for sending radio telegrams according to a defined transmission time scheme in time intervals with pauses in between and comprising at least one radio receiver (3) adapted for being temporarily active and ready to receive according to the transmission time scheme, for receiving radio telegrams from said radio transmitter (1, 2), **characterized by** said radio receiver (3) comprising means for modifying its reception settings for receiving the following radio telegram transmission of the radio transmitter depending on the reception quality during the preceding reception of a radio telegram transmission from said radio transmitter (1, 2).

2. Radio transmission system according to claim 1, **characterized by** said means for modifying the reception settings comprising means for setting the nominal reception frequency (f_{1E}, f_{2E}) for receiving the following radio telegram transmission from the radio transmitter.

3. Radio transmission system according to claim 2, **characterized by** said radio receiver (3) comprising a discriminator circuit for detecting deviations of the set nominal reception frequency (f_{1E}, f_{2E}) from the transmitting frequency (f₁, f₂) of said radio transmitter, said means for setting the nominal reception frequency for receiving the following radio telegram transmission being adapted for setting the nominal reception frequency for receiving the following radio telegram transmission according to the deviation detected by said discriminator circuit of said nominal reception frequency (f_{1E}, f_{2E}) of the radio receiver (3) from said transmitting frequency (f₁, f₂) of said radio transmitter during reception of the preceding radio telegram transmission of said radio transmitter.

4. Radio transmission system according to claim 2 or 3, **characterized by** said means for setting the nominal reception frequency for receiving the following radio telegram transmission being adapted for leaving the nominal reception frequency (f_{1E}, f_{2E}) for the reception of the following radio telegram transmission unchanged, if said radio receiver (3) was able to receive the preceding radio telegram transmission with a minimum reception field strength.

5. Radio transmission system according to one of the preceding claims, **characterized by** said means for modifying the reception settings of said radio receiver comprising means for setting a nominal modulation parameter, especially the nominal modulation amplitude or the nominal modulation rate, for the reception and demodulation of the following radio telegram transmission from the radio transmitter.

6. Radio transmission system according to one of the preceding claims, **characterized by** said means for modifying the reception settings comprising means for detecting the reception field strength as a criterion for assessing the reception quality when receiving a radio telegram transmission.

7. Radio transmission system according to one of the preceding claims, **characterized by** said means for modifying the reception settings of said radio receiver being adapted for storing values of at least one radio reception parameter during reception of subsequent radio telegram transmissions of said radio transmitter and for determining an expected value of the radio reception parameter for the reception of the following radio telegram transmission on the basis of the stored values.

8. Radio transmission system according to claim 7, **characterized by** the radio reception parameter being a value which depends on the deviation of the selected nominal reception frequency (f₁, f₂) from the transmitting frequency (f₁, f₂) when receiving radio telegram transmissions.

9. Radio transmission system according to claim 7, **characterized by** said radio reception parameter being the reception field strength when receiving said radio telegram transmissions.

10. Radio transmission system according to claim 7, **characterized by** said radio reception parameter being a modulation parameter.

11. Radio transmission system according to one of the preceding claims, **characterized by** several radio transmitters (1, 2) being associated to said radio receiver (3), transmitting radio telegrams according to a respective transmission time scheme in time intervals with pauses in between, said radio receiver (3) being adapted for being temporarily active and ready-to-receive according to said transmission time schemes of said radio transmitters , for receiving the radio telegrams from the radio transmitters, said means for modifying the reception settings of the radio transmitter being adapted for modifying the reception settings for the reception of the subsequent radio telegram transmission of each radio transmitter depending on the reception quality of the preceding reception of a radio telegram transmission.

12. Radio transmission system according to one of the preceding claims, **characterized in that** it is integrated into a consumption data collection system with several consumption meters, said consumption meters being equipped with the radio transmitters - and the radio transmitters being adapted for transmitting consumption measurement data of their consumption meters in association to identification data for identifying the consumption meters.

13. Radio transmission system according to claim 10 or 11, **characterized in that** it comprises several radio receivers which are in groups associated to different radio transmitters and are integrated into a radio network comprising a data collection center for the reference data transmitted by the radio transmitters.

14. Radio transmission system according to one of the preceding claims, **characterized by** the radio transmitter/the radio transmitters not having any receiving function.

15. Radio transmission system according to one of the preceding claims, **characterized by** the radio transmitter/the radio transmitters and/or the radio receiver/the radio receivers being battery-operated devices.

## Revendications

1. Système de transmission radio comprenant au moins un émetteur radio (1, 2) adapté pour transmettre des radiotélégrammes selon un certain schéma temporel de transmission à des intervalles définis avec des pauses entre ces derniers, et comprenant au moins un récepteur radio (3) adapté pour être prêt temporairement à la réception selon le schéma temporel de transmission, pour recevoir des radiotélégrammes de l'émetteur radio (1, 2), **caractérisé par** le récepteur radio (3) comprenant des moyens pour modifier les réglages réception pour recevoir le prochain radiotélégramme de l'émetteur radio en fonction de la qualité de réception lors de la réception précédente d'un radiotélégramme de l'émetteur radio (1, 2).

2. Système de transmission radio selon la revendication 1, **caractérisé par** les moyens pour modifier les réglages réception comprenant des moyens pour régler la fréquence de réception désirée (f_{1E}, f_{2E}) pour la réception du prochain radiotélégramme de l'émetteur radio.

3. Système de transmission radio selon la revendication 2, **caractérisé par** le récepteur radio (3) comprenant un circuit discriminateur pour détecter des déviations de la fréquence de réception désirée (f_{1E}, f_{2E}) choisie par rapport à la fréquence de transmission (f₁, f₂) de l'émetteur radio, les moyens pour régler la fréquence de réception désirée pour la réception du prochain radiotélégramme étant adaptés pour régler la fréquence de réception désirée pour la réception du prochain radiotélégramme en fonction de la déviation de la fréquence de réception désirée (f_{1E}, f_{2E}) du récepteur radio (3) par rapport à la fréquence de transmission (f₁, f₂) du récepteur radio détectée par le circuit discriminateur, lors de la réception du radiotélégramme précédent.

4. Système de transmission radio selon la revendication 2 ou 3, **caractérisé par** les moyens pour adapter la fréquence de réception désirée pour la réception du prochain radiotélégramme étant réglés pour laisser la fréquence de réception désirée (f_{1E}, f_{2E}) pour la réception du prochain radiotélégramme inchangé si le récepteur radio (3) était capable de recevoir le radiotélégramme précédent avec une intensité de champ de réception minimale.

5. Système de transmission radio selon une des revendications précédentes, **caractérisé par** les moyens pour modifier les réglages de réception comprenant des moyens pour adapter un paramètre de modulation désiré, en particulier de l'amplitude de modulation ou du taux de modulation, pour la réception et la démodulation du prochain radiotélégramme de l'émetteur radio.

6. Système de transmission radio selon une des revendications précédentes, **caractérisé par** les moyens pour modifier les réglages de réception comprenant des moyens pour détecter l'intensité du champ de réception comme critère pour évaluer la qualité de réception lors de la réception d'un radiotélégramme.

7. Système de transmission radio selon une des revendications précédentes, **caractérisé par** les moyens pour modifier les réglages de réception du récepteur radio étant adaptés pour mémoriser les valeurs pour au moins un paramètre de réception radio lors de la réception de radiotélégrammes consécutifs de l'émetteur radio et pour déterminer sur la base de ces valeurs mémorisées une valeur attendue du paramètre de réception radio pour la réception du prochain radiotélégramme.

8. Système de transmission radio selon la revendication 7, **caractérisé par** le paramètre de réception radio étant un paramètre qui dépend de la déviation de la fréquence de réception désirée (f_{1E}, f_{2E}) choisie par rapport à la fréquence de transmission (f₁, f₂) lors de la réception des radiotélégrammes.

9. Système de transmission radio selon la revendication 7, **caractérisé par** le paramètre de réception radio étant l'intensité du champ de réception lors de la réception des radiotélégrammes.

10. Système de transmission radio selon la revendication 7, **caractérisé par** le paramètre de réception radio étant un paramètre de modulation.

11. Système de transmission radio selon une des revendications précédentes, **caractérisé par** plusieurs émetteurs radio (1, 2) étant associés au récepteur radio (3), transmettant des radiotélégrammes selon un certain schéma temporel de transmission à des intervalles définis avec des pauses entre ces derniers, le récepteur radio (3) étant adapté pour être prêt temporairement à la réception selon les schémas temporel de transmission de ces émetteurs radio, pour recevoir les radiotélégrammes des émetteurs radio, les moyens pour modifier les réglages réception du récepteur radio étant adaptés pour modifier les réglages réception pour la réception du prochain radiotélégramme de chaque émetteur radio en fonction de la qualité de réception lors de la réception précédente d'un radiotélégramme de l'émetteur radio en question.

12. Système de transmission radio selon une des revendications précédentes avec plusieurs émetteurs radio, **caractérisé en ce qu'**il est intégré dans un système de collection de données de consommation avec plusieurs appareils de mesure de consommation, les appareils de mesure de consommation étant équipés avec les émetteurs radio - et les émetteurs radio étant adaptés pour transmettre les données de mesure de consommation de leurs appareils de mesure de consommation en fonction de données d'identification pour l'identification des appareils de mesure de consommation.

13. Système de transmission radio selon les revendications 10 ou 11, **caractérisé en ce qu'**il comprend plusieurs récepteurs radio associés en groupe à des émetteurs radio différents et intégrés dans un réseau radio, comprenant une centrale de collection de données pour les données de consommation transmises par les émetteurs radio.

14. Système de transmission radio selon une des revendications précédentes, **caractérisé en ce que** l'émetteur radio/les émetteurs radio ne comprennent pas de fonction de réception.

15. Système de transmission radio selon une des revendications précédentes, **caractérisé par** l'émetteur radio/ les émetteurs radio et/ou le récepteur radio/les récepteurs radio étant des appareils fonctionnant au moyen d'une batterie.
